# EUROPÄISCHE PATENTSCHRIFT

(11) **EP 2 300 261 B1**
(45) Veröffentlichungstag und Bekanntmachung des Hinweises auf die Patenterteilung: **07.11.2012**
(21) Anmeldenummer: 09780081.7
(22) Anmeldetag: 02.07.2009
(51) Int. Cl.: B60T 13/58, B60T 13/66, B60L 7/14, B60L 7/06, B60L 7/24

(54) **SCHIENENFAHRZEUG, DAS ALS ANTRIEBSMOTOR EINEN PERMANENTERREGTEN SYNCHRONMOTOR AUFWEIST**
RAIL VEHICLE WHICH HAS A PERMANENT MAGNET SYNCHRONOUS MOTOR AS TRACTION MOTOR
VÉHICULE FERROVIAIRE DOTÉ D'UN MOTEUR SYNCHRONE À AIMANTS PERMANENTS COMME MOTEUR DE TRACTION

(30) Priorität: 17.07.2008 DE 102008033639
(43) Veröffentlichungstag der Anmeldung: 30.03.2011
(73) Patentinhaber: Siemens Aktiengesellschaft, 80333 München (DE)
(72) Erfinder: SCHAEFER-ENKELER, Andreas, 91341 Röttenbach (DE)
(86) Internationale Anmeldenummer: PCT/EP2009/058299
(87) Internationale Veröffentlichungsnummer: WO 2010/006927

(56) Entgegenhaltungen:
- EP-A1- 0 697 321
- WO-A1-2008/052694
- DE-A1-102004 032 680
- DE-A1-102006 024 239
- DE-B- 1 078 606

## Beschreibung

Die Erfindung betrifft ein Schienenfahrzeug, das als Antriebsmotor einen permanenterregten Synchronmotor aufweist, wobei zwischen einem Umrichter und dem Antriebsmotor eine Schaltvorrichtung angeordnet ist, die im Fahrbetrieb den Antriebsmotor mit dem Umrichter und im generatorischen Betrieb des Antriebsmotors diesen mit mindestens einem Bremswiderstand verbindet.

Ein solches Schienenfahrzeug ist aus der DE 10 20-04 032 680 A1 bekannt. Ein Abbremsen des Fahrzeuges mit der Motorbremse erfolgt dabei dadurch, dass sich der Läufer der permanenterregten Synchronmaschine, solange sich das Fahrzeug weiter bewegt, dreht. Dabei wird in den Ständerwicklungen eine Spannung induziert. Im Ständerstromkreis angeordnete Bremswiderstände erzeugen dann ein Bremsmoment, das auf den Läufer wirkt.

Wenn ein derartiges Fahrzeug abgeschleppt wird, wobei in der Regel keine externe Energieversorgung mehr gegeben ist, wird das Fahrzeug durch die Motorbremse ständig gebremst. Das war bisher nur zu verhindern, indem die Antriebsmotoren beim Abschleppen elektrisch vollständig abgetrennt sind. Das hat jedoch dann zur Folge, dass das abgeschleppte Fahrzeug nicht mehr gebremst werden kann.

Der Erfindung liegt die Aufgabe zugrunde, ein Schienenfahrzeug, das als Antriebsmotor einen permanenterregten Synchronmotor aufweist, anzugeben, das einerseits abgeschleppt werden kann, ohne dass der Antriebsmotor elektrisch abgetrennt werden muss und das darüber hinaus auch während des Abschleppens gebremst werden kann.

Die Aufgabe wird gemäß der Erfindung dadurch gelöst, dass die Schaltvorrichtung pneumatisch betätigbar ist und dazu mit einer Hauptluftsteuerleitung einer Druckluftbremsanlage verbunden ist, dass im Fahrbetrieb, wenn der Druck in der Hauptluftsteuerleitung größer als ein Schwellwert ist, der Antriebsmotor mit dem Umrichter verbunden ist und dass zum Bremsen, wenn der Druck in der Hauptluftsteuerleitung kleiner als der Schwellwert ist, der Antriebsmotor mit dem mindestens einen Bremswiderstand verbunden ist.

Die Hauptluftsteuerleitung wird beim Abschleppen vom abschleppenden Fahrzeug aus mit Druckluft versorgt.

Dadurch, dass die Schaltvorrichtung pneumatisch betätigbar ist und zum Betätigen die Hauptluftsteuerleitung einer Druckluftbremsanlage herangezogen wird, wird der Vorteil erzielt, dass der permanenterregte Synchronmotor dann mit dem mindestens einen Bremswiderstand verbunden ist, wenn nach Absinken des Druckes in der Hauptluftsteuerleitung unter den Schwellwert auch die Druckluftbremsanlage bremst. Es wird einerseits verhindert, dass beim Abschleppen stets eine Verbindung des Antriebsmotors mit dem Bremswiderstand existiert, was zu einem ständigen Bremsen führen würde, und es wird andererseits gewährleistet, dass immer dann, wenn mit der Druckluftbremsanlage des abschleppenden Fahrzeugs gebremst wird, die Motorbremse des abgeschleppten Fahrzeugs wirkt, indem der Antriebsmotor über die Schaltvorrichtung mit dem mindestens einen Bremswiderstand verbunden ist. Vorteilhafterweise bremst also das abgeschleppte Fahrzeug, auch wenn es von einer externen Energieversorgung abgetrennt ist, zusammen mit dem abschleppenden Fahrzeug. Die Motorbremse aus permanenterregtem Synchronmotor und mindestens einem Bremswiderstand im abgeschleppten Fahrzeug unterstützt die Druckluftbremsanlage.

Beispielsweise weist die Schaltvorrichtung einen Handschalter oder einen Anschluss für ein mechanisches Gestänge auf, durch die der Antriebsmotor dauerhaft von dem mindestens einen Bremswiderstand abtrennbar ist. Damit kann bei Bedarf vorgesehen sein, dass das abgeschleppte Fahrzeug nie gebremst wird.

Beispielsweise ist die pneumatisch betätigbare Schaltvorrichtung mit einer Druckanzeige verbunden, die anzeigt, ob der Schwellwert des Druckes unterschritten und der Antriebsmotor dadurch mit dem mindestens einen Bremswiderstand verbunden ist. Hiermit ist zu erkennen, ob die Motorbremse des abgeschleppten Fahrzeuges in Betrieb ist oder nicht.

Nach einem anderen Beispiel steht die Schaltvorrichtung mit einem Anzeigegerät in Verbindung, das anzeigt, ob eine elektrische Verbindung zwischen dem Antriebsmotor und dem mindestens einen Bremswiderstand besteht. Auch hiermit kann festgestellt werden, ob die Motorbremse des abgeschleppten Fahrzeuges in Betrieb ist oder nicht.

Nach einem alternativen Beispiel steht die Schaltvorrichtung mit einem anderen Anzeigegerät in Verbindung, das elektrisch oder pneumatisch arbeitet und anzeigt, ob der mindestens eine Bremswiderstand vom Antriebsmotor dauerhaft abgetrennt ist. Auch hiermit wird festgestellt, ob die Motorbremse in Betrieb ist oder nicht.

Ein üblicher Druck in der Hauptluftsteuerleitung ist ca. 5 bar. Ein geeigneter Schwellwert des Druckes, bei dessen Unterschreiten der Antriebsmotor mit dem mindestens einen Bremswiderstand verbunden wird, ist 3,5 bar.

Nach der Erfindung wird insbesondere der Vorteil erzielt, dass ein Schienenfahrzeug, das als Antriebsmotor einen permanenterregten Synchronmotor aufweist, in einfacher Weise abgeschleppt werden kann und darüber hinaus sogar während des Abschleppens gebremst werden kann.

## Patentansprüche

1. Schienenfahrzeug, das als Antriebsmotor einen permanenterregten Synchronmotor aufweist, wobei zwischen einem Umrichter und dem Antriebsmotor eine Schaltvorrichtung angeordnet ist, die im Fahrbetrieb den Antriebsmotor mit dem Umrichter und im generatorischen Betrieb des Antriebsmotors diesen mit mindestens einem Bremswiderstand verbindet, **dadurch gekennzeichnet, dass** die Schaltvorrichtung pneumatisch betätigbar ist und dazu mit einer Hauptluftsteuerleitung einer Druckluftbremsanlage verbunden ist, dass im Fahrbetrieb, wenn der Druck in der Hauptluftsteuerleitung größer als ein Schwellwert ist, der Antriebsmotor mit dem Umrichter verbunden ist und dass zum Bremsen, wenn der Druck in der Hauptluftsteuerleitung kleiner als der Schwellwert ist, der Antriebsmotor mit dem mindestens einen Bremswiderstand verbunden ist.

2. Schienenfahrzeug nach Anspruch 1, **dadurch gekennzeichnet, dass** die Schaltvorrichtung einen Handschalter oder einen Anschluss für ein mechanisches Gestänge aufweist, durch die der Antriebsmotor dauerhaft von dem mindestens einen Bremswiderstand abtrennbar ist.

3. Schienenfahrzeug nach einem der Ansprüche 1 oder 2, **dadurch gekennzeichnet, dass** die pneumatisch betätigbare Schaltvorrichtung mit einer Druckanzeige verbunden ist,.die anzeigt, ob der Schwellwert des Druckes unterschritten und der Antriebsmotor dadurch mit dem mindestens einen Bremswiderstand verbunden ist.

4. Schienenfahrzeug nach einem der Ansprüche 1 bis 3, **dadurch gekennzeichnet, dass** die Schaltvorrichtung mit einem Anzeigegerät in Verbindung steht, das anzeigt, ob eine elektrische Verbindung zwischen dem Antriebsmotor und dem mindestens einen Bremswiderstand besteht.

5. Schienenfahrzeug nach einem der Ansprüche 1 bis 4, **dadurch gekennzeichnet, dass** die Schaltvorrichtung mit einem anderen Anzeigegerät in Verbindung steht, das elektrisch oder pneumatisch arbeitet und anzeigt, ob der mindestens eine Bremswiderstand vom Antriebsmotor dauerhaft abgetrennt ist.

## Claims

1. Rail vehicle which has a permanent-magnet synchronous motor as a traction motor, wherein a switching apparatus is arranged between a converter and the traction motor, connects the traction motor to the converter during driving operation and connects the traction motor to at least one braking resistance during generator operation of the traction motor, **characterized in that** the switching apparatus can be operated pneumatically and for this purpose is connected to a main air control line of a compressed-air braking installation, **in that** during driving operation, when the pressure in the main air control line is greater than a threshold value, the traction motor is connected to the converter, and **in that**, for braking, when the pressure in the main air control line is less than the threshold value, the traction motor is connected to the at least one braking resistance.

2. Rail vehicle according to Claim 1, **characterized in that** the switching apparatus has a manual switch or a connection for a mechanical linkage, by means of which the traction motor can be permanently disconnected from the at least one braking resistance.

3. Rail vehicle according to one of Claims 1 or 2, **characterized in that** the pneumatically operable switching apparatus is connected to a pressure indication which indicates whether the pressure threshold value has been undershot and the traction motor is therefore connected to the at least one braking resistance.

4. Rail vehicle according to one of Claims 1 to 3, **characterized in that** the switching apparatus is connected to an indicator which indicates whether there is an electrical connection between the traction motor and the at least one braking resistance.

5. Rail vehicle according to one of Claims 1 to 4, **characterized in that** the switching apparatus is connected to another indicator which operates electrically or pneumatically and indicates whether the at least one braking resistance has been permanently disconnected from the traction motor.

## Revendications

1. Véhicule ferroviaire qui a comme moteur de traction un moteur synchrone à excitation permanente, dans lequel entre un convertisseur et le moteur de traction est monté un dispositif de commutation qui, en fonctionnement en moteur du moteur de traction, relie le moteur de traction au convertisseur et en fonctionnement en génératrice du moteur de traction, relie celui-ci à au moins une résistance de frein, **caractérisé en ce que** le dispositif de commutation peut être actionné pneumatiquement et à cet effet est relié à un conduit de commande d'air principal d'un système de frein à air comprimé, **en ce que**, en fonctionnement en moteur, lorsque la pression dans le conduit de commande d'air principal est plus grande qu'une valeur de seuil, le moteur de traction est relié au convertisseur et **en ce que**, pour le freinage, lorsque la pression dans le conduit de commande d'air principal est plus petite que la valeur de seuil, le moteur de traction est relié à la au moins une résistance de frein.

2. Véhicule ferroviaire suivant la revendication 1, **caractérisé en ce que** le dispositif de commutation est un commutateur manuel ou une borne pour une tringlerie mécanique, par laquelle le moteur de traction peut être séparé en permanence de la au moins une résistance de frein..

3. Véhicule ferroviaire suivant l'une des revendications 1 ou 2, **caractérisé en ce que** le dispositif de commutation pouvant être actionné pneumatiquement est relié à une indication de pression qui indique si on est passé en dessous de la valeur de seuil de la pression et si le moteur de traction est ainsi relié à la au moins une résistance de frein.

4. Véhicule ferroviaire suivant l'une des revendications 1 à 3, **caractérisé en ce que** le dispositif de commutation est en liaison avec un appareil d'affichage qui indique si une liaison électrique existe entre le moteur de traction et la au moins une résistance de frein.

5. Véhicule ferroviaire suivant l'une des revendications 1 à 4, **caractérisé en ce que** le dispositif de commutation est en liaison avec un autre appareil d'affichage, qui opère et indique électriquement ou pneumatiquement si la au moins une résistance de frein est séparée en permanence du moteur de traction.
